# EUROPEAN PATENT SPECIFICATION

(11) **EP 4 234 384 B1**
(45) Date of publication and mention of the grant of the patent: **09.07.2025**
(21) Application number: 22158313.1
(22) Date of filing: 23.02.2022
(51) Int. Cl.: B62M 11/16, B62M 11/18, B62M 25/00, F16H 3/66

(54) **GEAR SWITCHING CONTROL DEVICE OF AN INTERNAL DERAILLEUR**
VORRICHTUNG ZUR STEUERUNG DER GANGSCHALTUNG EINER INTERNEN SCHALTUNG
DISPOSITIF DE COMMANDE DE CHANGEMENT DE VITESSE D'UN DÉRAILLEUR INTERNE

(43) Date of publication of application: 30.08.2023
(73) Proprietor: NEW KAILUNG GEAR CO., LTD., Kaohsiung (TW)
(72) Inventor: LIU, Jen-Chih, Kaohsiung (CN)
(74) Representative: Treeby, Philip David William

(56) References cited:
- EP-A1- 2 412 623
- EP-A1- 3 715 676
- WO-A1-01/92094
- CN-A- 113 998 050

## Description

### FIELD OF THE INVENTION

The present invention relates to a gear switching control device of an internal derailleur.

### BACKGROUND OF THE INVENTION

The technology of interior derailleurs of bicycles is known in the art and used commonly. Many different technologies provide different speed change ratios based different technical theories. However, these differences affect the structures and effects of the bicycles. Furthermore, there are many new designs which provide useful effects, but they still have defects in use. Therefore they are not practical due to the defects in applications.

For multiple stage speed change designs which are variable based on the users. For example, sporters like multiple stage speed change design with many speed change stages, while people used in daily life likes speed change of just few stages, generally, it has three or four change stages. Therefore, fewer change stage design has wide markets and are acceptable widely, and also suitable under consideration of economics. In general, three or fourth speed changes are widely used.

However, for derailleurs with fewer speed change stages, they have a defect of temporarily jump in change of gears which causes the unsmooth in driving bicycles. For a fourth speed change design, only fewer layer (two layers) planet gear speed change system is used. When changing from 2 stage to three stage, the closing of the axial ratchet in the first planet gear speed change system for control the sun gear to be fixed or freely rotating is operated along an inverse direction, as a result, in operation, a great torque is needed. Furthermore, in mechanical structure, the axial ratchet of the first planet gear speed change system close firstly, while the axial ratchet of the second planet gear speed change system does not open, the speed auto-changes to the first speed and then to the third speed. Or the axial ratchet of the first planet gear speed change system does not close firstly, while the axial ratchet of the second planet gear speed change system has opened, the speed auto-changes to the fourth speed and then to the first speed. However, these phenomenon will induce the temporary speed jump and thus the operation is not smooth. WO 01/92094 A1 discusses a multi-speed hub gear, in particular for a cycle, and discloses a gear switching control device of an internal derailleur according to the preamble of claim 1.

### SUMMARY OF THE INVENTION

Accordingly, the object of the present invention is to provide a gear switching control device of an internal derailleur, advantages of the present invention are that:
The present invention could resolve the problem induced from the gear change of internal derailleurs of two layer planet gear speed change system.

The present invention has a simple structure, lower torque, and lower power which is novel, practical and progressive.

Each layer of the planet gear speed change system has identical speed change ratio and as a result, and thus they have same module structure. The cost is reduced effectively and the manufacturing steps are simplified.

To achieve above object, in accordance with the present invention, there is provided a gear switching control device of an internal derailleur as recited by claim 1. Preferred features are set out in the dependent claims.

By the rotation of the track sleeve of the gear switching control unit, each ratchet control ring controls the axial ratchet switch of a respective planet gear speed change system so as to affectively resolve the speed delay in gear change period of a prior art bicycle derailleur having two layers of planet gear speed change systems. Furthermore, controlling of gear switching is simplified, light torque with less power.

### BRIEF DESCRIPTION OF THE DRAWINGS

Fig. 1 is a cross sectional schematic view of the embodiment of the present invention.
Fig. 2 is an assembly schematic view showing the single layer planet gear speed change system of the present invention.
Fig. 3 is a cross sectional schematic view of the single layer planet gear speed change system of the present invention after assembly.
Fig. 4 shows the derailleur of the present invention.
Fig.5 is a perspective view of the track sleeve of the present invention.
Fig. 6 shows the track sleeve of the present invention.
Fig. 7 is a right side view of Fig. 6.
Fig. 8 is a perspective view showing the first axial ratchet control ring of the present invention.
Fig. 9 is a front view of the first axial ratchet control ring of the present invention.
Fig. 10 is a right side view of Fig. 9.
Fig. 11 is a left side view of Fig. 9.
Fig.12 is a perspective view showing the second axial ratchet control ring of the present invention.
Fig. 13 is a front view of the second axial ratchet control ring of the present invention.
Fig. 14 is a right side view of Fig. 13.
Fig. 15 is a left side view of Fig. 13.
Fig.16 is a perspective view showing the third axial ratchet control ring of the present invention.
Fig. 17 is a front view of the third axial ratchet control ring of the present invention.
Fig. 18 is a right side view of Fig. 17.
Fig. 19 is a left side view of Fig. 17.
Fig. 20 is a schematic view showing that the first axial ratchet control ring is in an open stage.
Fig. 21 is a schematic view showing that the second axial ratchet control ring is in an open stage.
Fig. 22 is a schematic view showing that the third axial ratchet control ring is in an open stage.
Fig. 23-1 is a state schematic view showing the operation state in the first derailleur stage according to the present invention.
Fig. 23-2 is a state schematic view showing the operation state in the second derailleur stage according to the present invention.
Fig. 23-3 is a state schematic view showing the operation state in the third derailleur stage according to the present invention.
Fig. 23-4 is a state schematic view showing the operation state in the fourth derailleur stage according to the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope of the present invention defined in the appended claims.

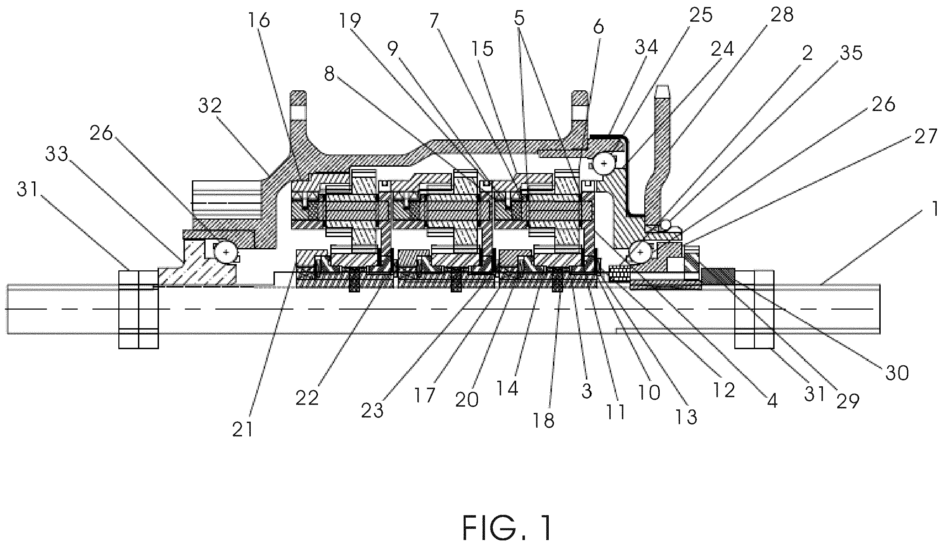

As illustrated in Figs. 1 to 3, an embodiment of embodiment is illustrated. In this embodiment, a three layer planet gear speed change system is used for description of the present invention. However, the present invention can be realized in a planet gear speed change system over three layers.

With reference to Fig. 1, a derailleur of the present invention includes a plurality of layers of planet gear speed change system. The present invention includes the following elements: a wheel axis 1, a track sleeve 2, sun gears 3, planet frames 4, washers 5, two layered planet gear 6, pins 7, ratchets 8, claw springs 9, right toggles 10, pads 11, position rings 12, washers 13, left toggles 14, inner teeth 15, outer casing interior teeth 16, axial ratchets 17, springs 18, positioning springs 19, buckling rings 20, a first ratchet control ring 21, a second ratchet control ring 22, a third ratchet control ring 23, input base 24, a large bearing 25, a small bearing 26, a small bearing seat 27, a chain disk 28, a control plate 29, a sleeve 30, a net 31, a casing 32, a distal bearing seat 33, a dust proof cover 34, and a chain disk positioning spring 35.

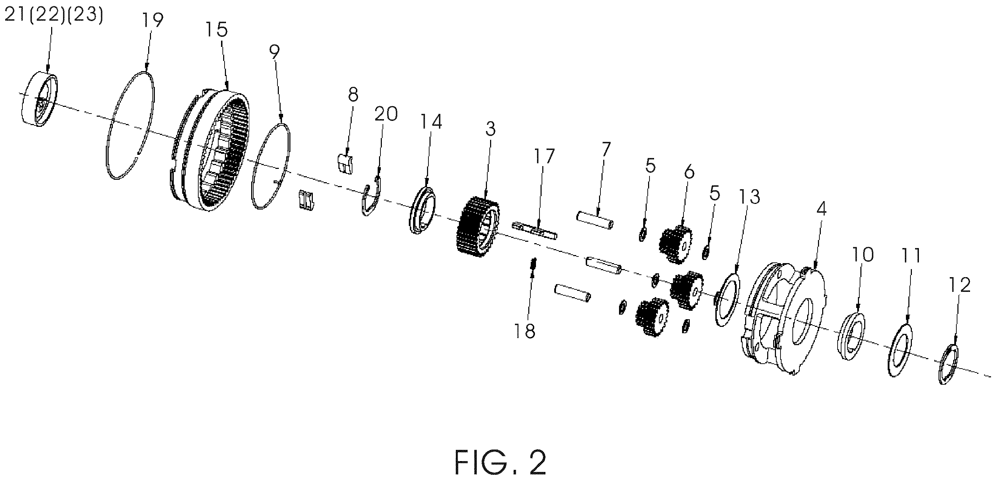

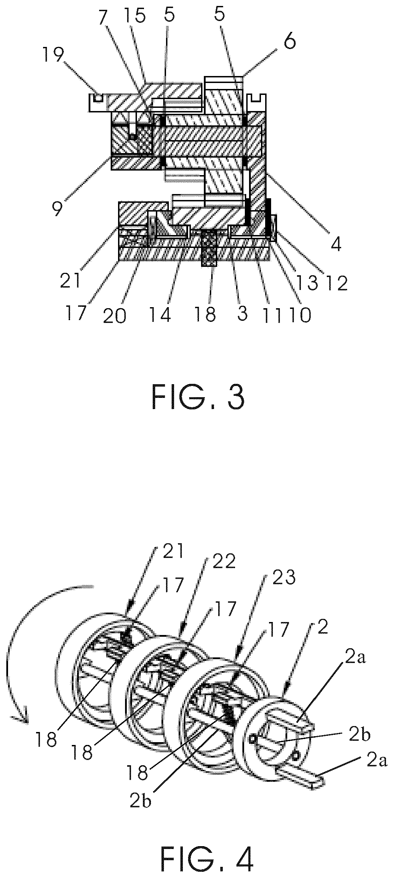

The interior of the interior derailleur has a first, a second and a third planet gear speed change systems. Each planet gear speed change system has same speed ratio so that they have identical modular structures as illustrated in Figs. 2 and 3. As a result, the cost in develop and manufacturing is reduced greatly and the assembly work is simplified.

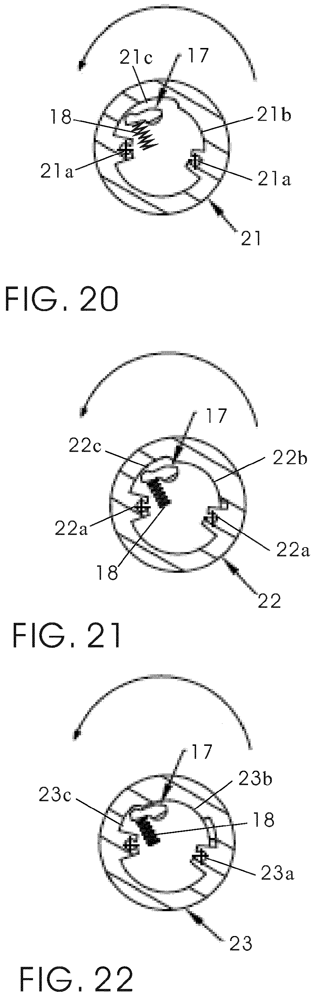

Between a sun gear 3 of each planet gear speed change system and a wheel axis 1 of an interior derailleur is installed with an axial ratchet 17 for controlling separation and combination of the sun gear 3 and the axis 1. A spring 18 is installed between the axial ratchet 17 and the wheel shaft 1 so that the axial ratchet 17 are adhered to cams of the first ratchet control ring 21, the second ratchet control ring 22 and the third ratchet control ring 23, as illustrated in Figs. 20, 21 and 22.

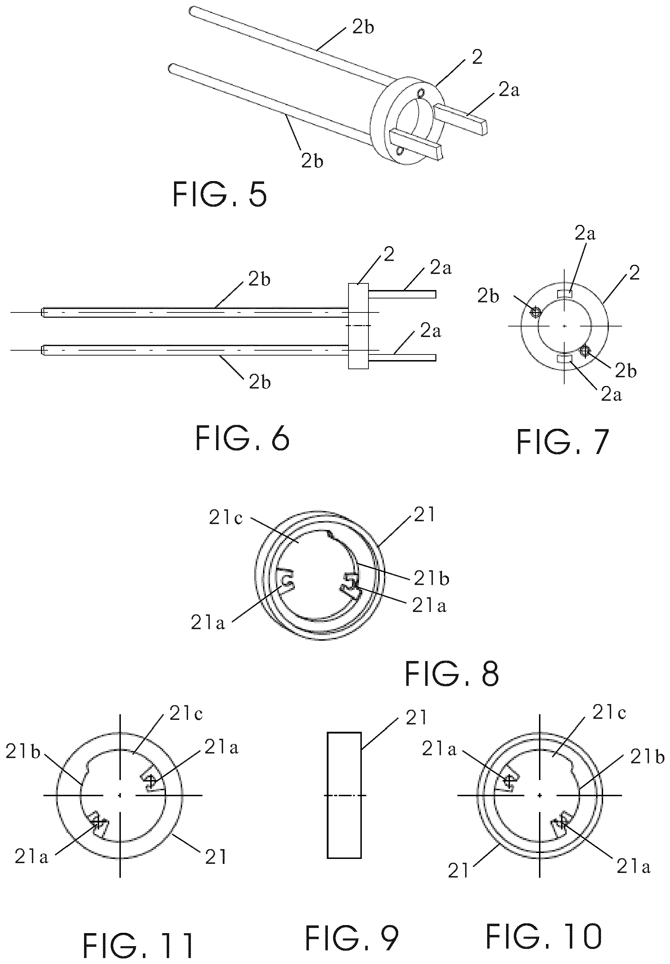

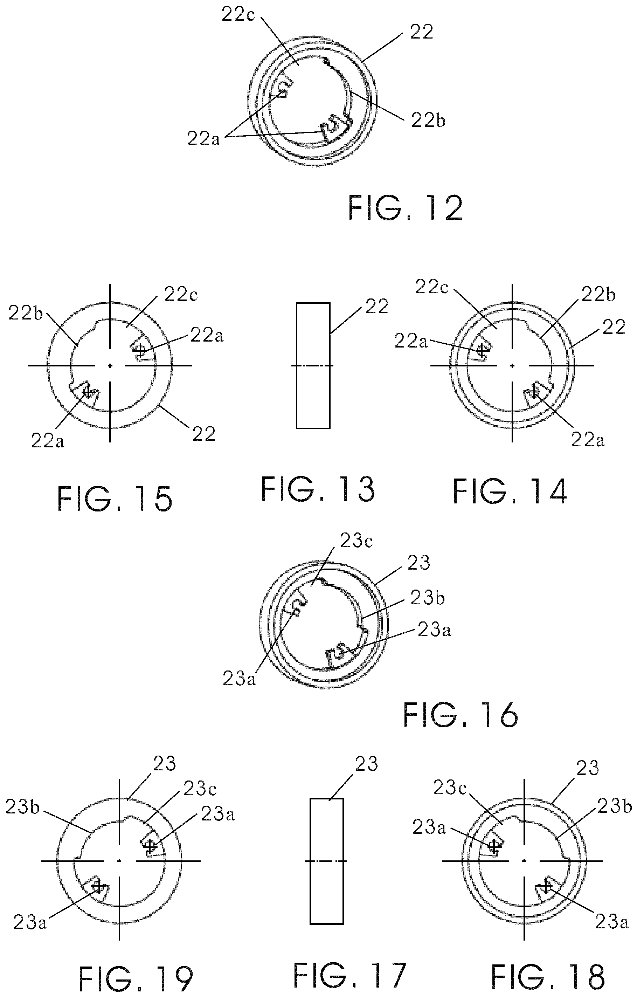

With reference to Fig. 4, all the axial ratchets 17 are controlled by a gear switch control device as illustrated in Figs. 4 to 7. The gear switch control device includes a track sleeve and the first axial ratchet control ring 21 (referring to Fig. 8 to 11), the second axial ratchet control ring 22 (referring to Fig. 12 to 15) and third axial ratchet control ring 23 (referring to Fig. 16 to 19) which are all serial connected to the same track sleeve 2. Referring to Figs. 5 to 7, one end of the track sleeve 2 has an external action portion 2a which is movable by external forces and another end thereof is installed with a linking rod 2b which serially connect all the axial ratchet control rings 21, 22 and 23.

Each of the axial ratchet control rings 21, 22 and 23 are formed with respective connecting holes 21a, 22a and 23a for receiving the track sleeve 2. Each of the first axial ratchet control ring 21, the second axial ratchet control ring 22 and the third axial ratchet control ring 23 is installed with a cam (or cam like device). These cams includes respective first, second and third derailleur closing surfaces 21b, 22b, and 23b and respective first, second and third derailleuring opening surfaces 21c, 22c, and 23c for derailleuring the axial ratchet 17 between the wheel axis 1 and respective sun gear 3. Movable radial ranges of the respective first, second and third derailleur closing surfaces 21b, 22b, and 23b are different from each other, and movable radial ranges of the respective first, second and third derailleur opening surfaces 21c, 22c, and 23c are different from each other

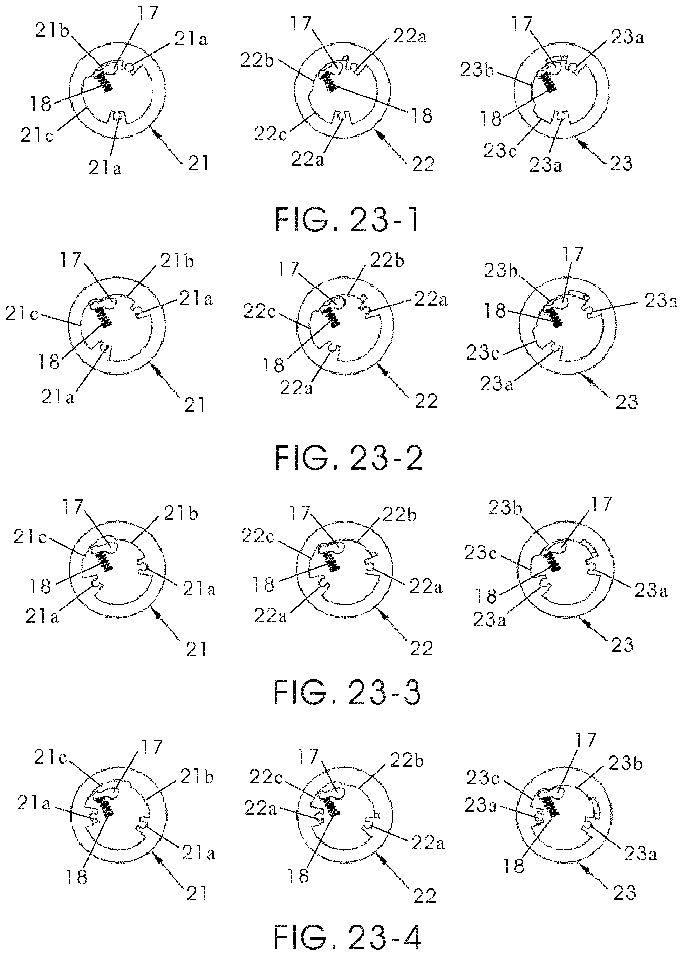

With reference to Figs. 23-1 to 23-4, it shows derailleuring states of the axial ratchets 17 between the wheel axis 1 and the sun gear 3 based on the structure relations for the first axial ratchet control ring 21, second axial ratchet control ring 23 and third axial ratchet control ring 23 in three different derailleuring positions from the first to fourth derailleuring positions.

Fig. 23-1 shows the first derailleuring position, in that the track sleeve 2 does not act. The axial ratchet 17 of the first planet gear speed change system is in the radial range of the derailleur closing surface 21b of the first axial ratchet control ring 21. Therefore the axial ratchet 17 of the first planet gear speed change system causes the sun gear 3 of the first planet gear speed change system is in a free state without being fixed. The axial ratchet 17 of the first planet gear speed change system is in the radial range of the derailleur closing surface 21b of the first axial ratchet control ring 21. Therefore the axial ratchet 17 causes the sun gear 3 of the first planet gear speed change system is in a free state without being fixed. The axial ratchet 17 of the second planet gear speed change system is in the radial range of the derailleur closing surface 22b of the second axial ratchet control ring 22. Therefore the axial ratchet 17 of the second planet gear speed change system causes the sun gear 3 of the second planet gear speed change system is in a free state without being fixed. The axial ratchet 17 of the third planet gear speed change system is in the radial range of the derailleur closing surface 23b of the third axial ratchet control ring 23. Therefore the axial ratchet 17 of the third planet gear speed change system causes the sun gear 3 of the third planet gear speed change system is in a free state without being fixed. That is, all the sun gears 3 are in free rotation state without being fixed. At this moment, speed ratio is 1.

Fig. 23-2 shows that the second derailleuring position, in that, the track sleeve 2 is in a second gear position as it is switched from a first gear position to the second gear position, the axial ratchet 17 of the first planet gear speed change system is in the in the radial range of the derailleur opening surface 21c of the first axial ratchet control ring 21, as a result, the axial ratchet 17 of the first planet gear speed change system causes that the sun gear 3 of the first planet gear speed change system is fixed. The axial ratchet 17 of the second planet gear speed change system is within the radial range of the derailleur closing surface 22b of the second axial ratchet control ring 22 so that the axial ratchet 17 of the second planet gear speed change system causes that the sun gear 3 of the second planet gear speed change system is in a free rotating state. The axial ratchet 17 of the third planet gear speed change system is within the radial range of the derailleur closing surface 23b of the third axial ratchet control ring 23, as a result, the axial ratchet 17 of the third planet gear speed change system causes the sun gear 3 of the third planet gear speed change system is in a free rotating state. At this moment, the axial ratchet 17 of the first planet gear speed change system is in a derailleur opening state, that is, the sun gear 3 of the first planet gear speed change system is fixed, while the axial ratchets 17 of the second and third planet gear speed change systems are in derailleur closing state, that is, the sun gears of the second and third planet gear speed change systems are in a free rotation state, and the speed ratio of a.

Fig. 23-3 shows that the track sleeve 2 of the gear switching control structure is switched from second gear position to third gear position. In the third gear position, the axial ratchets 17 of the first and second planet gear speed change system is within a radial range of the derailleur opening surface 21c of the first axial ratchet control ring 21 so that the axial ratchets 17 of the first and second planet gear speed change system causes that the sun gears 3 of the first and second planet gear speed change system are fixed. The axial ratchet 17 of the third planet gear speed change system is positioned within the radial range of the derailleur closing surface 23b of the third axial ratchet control ring 23 so that axial ratchet 17 of the third planet gear speed change system causes that the sun gear 3 of the third planet gear speed change system is still in a free rotation state. At this time, the axial ratchets 17 of the first and second planet gear speed change system is in a derailleur opening state, that is, the sun gear 3 is in a fixed state, while the axial ratchet 17 of the third planet gear speed change system is in a derailleur closing state and the sun gear 3 thereof is in a free rotation state. At this moment, the speed ratio is square a (a to the power of 2).

Fig. 23-4 shows that the track sleeve 2 of the gear switching control structure is switched from third gear position to fourth gear position. In the fourth gear position, the axial ratchets 17 of the first planet gear speed change system is positioned in a radial range of the derailleur opening surface 21c of the first axial ratchet control ring 21, thereby, the axial ratchet 17 of the first planet gear speed change system causes the sun gear 3 of the first planet gear speed change system is in a fixed state. The axial ratchet 17 of the second planet gear speed change system is positioned in a radial range of the derailleur opening surface 22c of the second axial ratchet control ring so that the axial ratchet 17 of the second planet gear speed change system causes that the sun gear 3 of the second planet gear speed change system is in a fixed state. The axial ratchet 17 of the third planet gear speed change system is positioned in the radial range of the derailleur opening surface 23c of the third axial ratchet control ring, as a result, the axial ratchet 17 of the third planet gear speed change system causes that the sun gear 3 of the third planet gear speed change system is in a fixed state. At this moment, the axial ratchets 17 of the first to third planet gear speed change system are in a derailleur opening state. That is, all the sun gears 3 are in a fixed state. Now, the speed ratio is a to the power of 3.

The Figs. 23-1 to 23-4 show the operation from a low gear level to a high gear level and show the gear variations of the axial ratchets 17 of various planet gear speed change systems. However, it is desired to have the result of high gear level to low gear level, the sequence is those from Figs. 23-4 to 23-1 along a reverse order.

Advantages of the present invention are that: the present invention could resolve the problem induced from the gear change of internal derailleurs of two layer planet gear speed change system. The present invention has a simple structure, lower torque, and lower power which is novel, practical and progressive. Each layer of the planet gear speed change system has identical speed change ratio and as a result, and thus they have same module structure. The cost is reduced effectively and the manufacturing steps are simplified. The present invention is useful and economic.

The present invention is thus described, it will be obvious that the same may be varied in many ways. Such variations are not to be regarded as a departure from the scope of the present invention defined by the appended claims, and all such modifications as would be obvious to one skilled in the art are intended to be included within the scope of the following claims.

## Claims

1. A gear switching control device of an internal derailleur, said internal derailleur comprising:
a plurality of planet gear speed change systems; said gear switching control device comprising:
a gear switching control unit; a plurality of axial ratchets (17);
a plurality of axial ratchet control rings (21, 22 and 23) for controlling the action of said plurality of axial ratchets;
wherein the number of the plurality of axial ratchet control rings is identical to the number of the plurality of planet gear speed change systems; wherein the number of the plurality of axial ratchets is identical to the number of the plurality of axial ratchet control rings; and wherein the plurality of axial ratchet control rings are serially connected by the same gear switching control unit;
**characterized in that**
the gear switching control unit comprises: a track sleeve (2), wherein one end of the track sleeve (2) is installed with a force accept portion (2a) that is movable by external forces, and another end thereof is installed with a linking rod (2b) which serially connects the plurality of axial ratchet control rings (21, 22 and 23); and
wherein each of the axial ratchet control rings (21, 22 and 23) is formed with respective connecting holes (21a, 22a and 23a) for receiving the track sleeve (2); wherein each axial ratchet control ring (21, 22 and 23) is installed with a cam or cam-like device; and wherein the cams or cam-like devices have different operating moving ranges.

2. The gear switching control device of an internal derailleur as claimed in claim 1, wherein an interior of the internal derailleur includes the plurality of planet gear speed change systems, wherein, between a sun gear (3) of each planet gear speed change system and a wheel shaft (1) of the internal derailleur, a respective one of the plurality of axial ratchets (17) is configured to be installed; and wherein all the axial ratchets (17) are controlled by the same track sleeve (2).

3. The gear switching control device of an internal derailleur as claimed in claim 2, wherein each of the cams or cam-like devices includes respective derailleur closing surfaces (21b, 22b, and 23b) and respective derailleur opening surfaces (21c, 22c, and 23c) for derailleuring the respective axial ratchet (17); moving radial ranges of the respective derailleur closing surfaces (21b, 22b, and 23b) are different from each other, and moving radial ranges of the respective derailleur opening surfaces (21c, 22c, and 23c) are different from each other

4. The gear switching control device of an internal derailleur as claimed in claim 3, wherein there are three of said planet gear speed change systems in the internal derailleur; wherein, in a first gear position, the track sleeve (2) does not act; the axial ratchet (17) of the first planet gear speed change system is in the radial range of the derailleur closing surface (21b) of the first axial ratchet control ring (21), whereby the axial ratchet (17) of the first planet gear speed change system causes the sun gear (3) of the first planet gear speed change system to be in a free state without being fixed; the axial ratchet (17) of the second planet gear speed change system is in the radial range of the derailleur closing surface (22b) of the second axial ratchet control ring (22), whereby the axial ratchet (17) of the second planet gear speed change system causes the sun gear (3) of the second planet gear speed change system to be in a free state without being fixed; the axial ratchet (17) of the third planet gear speed change system is in the radial range of the derailleur closing surface (23b) of the third axial ratchet control ring (23), whereby the axial ratchet (17) of the third planet gear speed change system causes the sun gear (3) of the third planet gear speed change system to be in a free state without being fixed; that is, all the sun gears (3) are in a free rotation state without being fixed.

5. The gear switching control device of an internal derailleur as claimed in claim 4, wherein the track sleeve (2) is operable to be switched from the first gear position to a second gear position; wherein, in said second gear position, the axial ratchet (17) of the first planet gear speed change system is in the radial range of the derailleur opening surface (21c) of the first axial ratchet control ring (21), whereby the axial ratchet (17) of the first planet gear speed change system causes the sun gear (3) of the first planet gear speed change system to be fixed; the axial ratchet (17) of the second planet gear speed change system is within the radial range of the derailleur closing surface (22b) of the second axial ratchet control ring (22), whereby the axial ratchet (17) of the second planet gear speed change system causes the sun gear (3) of the second planet gear speed change system to be in a free rotating state; the axial ratchet (17) of the third planet gear speed change system is within the radial range of the derailleur closing surface (23b) of the third axial ratchet control ring (23), whereby the axial ratchet (17) of the third planet gear speed change system causes the sun gear (3) of the third planet gear speed change system to be in a free rotating state; at this moment, the axial ratchet (17) of the first planet gear speed change system is in a derailleur opening state, that is, the sun gear (3) of the first planet gear speed change system is fixed, while the axial ratchets (17) of the second and third planet gear speed change systems are in a derailleur closing state, that is, the sun gears of the second and third planet gear speed change systems are in a free rotation state.

6. The gear switching control device of an internal derailleur as claimed in claim 5, wherein the track sleeve (2) is operable to be switched from the second gear position to a third gear position; wherein, in said third gear position, the axial ratchet (17) of the first planet gear speed change system is within the radial range of the derailleur opening surface (21c) of the first axial ratchet control ring (21), whereby the axial ratchet (17) of the first planet gear speed change system causes the sun gear (3) of the first planet gear speed change system to be fixed;
the axial ratchet (17) of the second planet gear speed change system is within the radial range of the derailleur opening surface (22c) of the second axial ratchet control ring (22), whereby the axial ratchet (17) of the second planet gear speed change system causes the sun gear (3) of the second planet gear speed change system to be fixed;
the axial ratchet (17) of the third planet gear speed change system is positioned within the radial range of the derailleur closing surface (23b) of the third axial ratchet control ring (23), whereby the axial ratchet (17) of the third planet gear speed change system causes the sun gear (3) of the third planet gear speed change system to be still in a free rotation state; at this time, the axial ratchets (17) of the first and second planet gear speed change systems are in a derailleur opening state, that is, the sun gears (3) thereof are in a fixed state, while the axial ratchet (17) of the third planet gear speed change system is in a derailleur closing state and the sun gear (3) thereof is in a free rotation state.

7. The gear switching control device of an internal derailleur as claimed in claim 6, wherein the track sleeve (2) is operable to be switched from the third gear position to a fourth gear position; wherein, in said fourth gear position, the axial ratchet (17) of the first planet gear speed change system is positioned in the radial range of the derailleur opening surface (21c) of the first axial ratchet control ring (21), whereby the axial ratchet (17) of the first planet gear speed change system causes the sun gear (3) of the first planet gear speed change system to be in a fixed state; the axial ratchet (17) of the second planet gear speed change system is positioned in the radial range of the derailleur opening surface (22c) of the second axial ratchet control ring, whereby the axial ratchet (17) of the second planet gear speed change system causes the sun gear (3) of the second planet gear speed change system to be in a fixed state; the axial ratchet (17) of the third planet gear speed change system is positioned in the radial range of the derailleur opening surface (23c) of the third axial ratchet control ring, whereby the axial ratchet (17) of the third planet gear speed change system causes the sun gear (3) of the third planet gear speed change system to be in a fixed state; at this moment, the axial ratchets (17) of the first to third planet gear speed change systems are in a derailleur opening state; that is, all the sun gears (3) are in a fixed state.

## Patentansprüche

1. Vorrichtung zur Steuerung der Gangschaltung eines inneren Schaltwerks, wobei das genannte innere Schaltwerk Folgendes aufweist:
eine Mehrzahl von Planetengetriebegangwechselsystemen;
wobei die genannte Vorrichtung zur Steuerung der Gangschaltung Folgendes aufweist:
eine Gangschaltungssteuereinheit;
eine Mehrzahl von Axialhemmungen (17);
eine Mehrzahl von Axialhemmungssteuerringen (21, 22 und 23) zum Steuern der Mechanik der genannten Mehrzahl von Axialhemmungen;
wobei die Anzahl der Mehrzahl von Axialhemmungssteuerringen mit der Anzahl der Mehrzahl von Planetengetriebegangwechselsystemen identisch ist;
wobei die Anzahl der Mehrzahl von Axialhemmungen mit der Anzahl der Mehrzahl von Axialhemmungssteuerringen identisch ist; und wobei die Mehrzahl von Axialhemmungssteuerringen durch dieselbe Gangschaltungssteuereinheit in Reihe verbunden sind;
**dadurch gekennzeichnet, dass**
die Gangschaltungssteuereinheit Folgendes aufweist: eine Führungshülse (2), wobei ein Ende der Führungshülse (2) über einen Kraftaufnahmeteil (2a) verbaut ist, der durch externe Kräfte bewegbar ist, und ein anderes Ende davon über eine Verbindungsstange (2b) verbaut ist, die die Mehrzahl von Axialhemmungssteuerringen (21, 22 und 23) in Reihe verbindet; und
wobei jeder der Axialhemmungssteuerringe (21, 22 und 23) mit jeweiligen Verbindungslöchern (2la, 22a und 23a) zur Aufnahme der Führungshülse (2) versehen ist; wobei jeder Axialhemmungssteuerring (21, 22 und 23) mit einer Steuerkurve oder steuerkurvenartigen Vorrichtung verbaut ist; und wobei die Steuerkurven oder steuerkurvenartigen Vorrichtungen verschiedene Betriebsbewegungsbereiche haben.

2. Vorrichtung zur Steuerung der Gangschaltung eines inneren Schaltwerks nach Anspruch 1, wobei ein Inneres des inneren Schaltwerks die Mehrzahl von Planetengetriebegangwechselsystemen aufweist,
wobei eine jeweilige der Mehrzahl von Axialhemmungen (17) zum Verbauen zwischen einem Sonnenrad (3) jedes Planetengetriebegangwechselsystems und einer Radachse (1) des inneren Schaltwerks konfiguriert ist; und wobei die Axialhemmungen (17) alle von derselben Führungshülse (2) gesteuert werden.

3. Vorrichtung zur Steuerung der Gangschaltung eines inneren Schaltwerks nach Anspruch 2, wobei jede der Steuerkurven oder steuerkurvenartigen Vorrichtungen jeweilige Schaltwerkschließflächen (21b, 22b und 23b) und jeweilige Schaltwerköffnungsflächen (21c, 22c und 23c) zum Umschalten der jeweiligen Axialhemmung (17) aufweist;
Bewegungsradialbereiche der jeweiligen Schaltwerkschließflächen (21b, 22b und 23b) voneinander verschieden sind und Bewegungsradialbereiche der jeweiligen Schaltwerköffnungsflächen (21c, 22c und 23c) voneinander verschieden sind.

4. Vorrichtung zur Steuerung der Gangschaltung eines inneren Schaltwerks nach Anspruch 3, wobei sich im inneren Schaltwerk drei der genannten Planetengetriebegangwechselsysteme befinden; wobei in einer ersten Getriebestellung die Führungshülse (2) nicht wirkt; die Axialhemmung (17) des ersten Planetengetriebegangwechselsystems sich im Radialbereich der Schaltwerkschließfläche (21b) des ersten Axialhemmungssteuerrings (21) befindet, so dass die Axialhemmung (17) des ersten Planetengetriebegangwechselsystems veranlasst, dass das Sonnenrad (3) des ersten Planetengetriebegangwechselsystems sich in einem freien Zustand ohne Fixierung befindet; die Axialhemmung (17) des zweiten Planetengetriebegangwechselsystems sich im Radialbereich der Schaltwerkschließfläche (22b) des zweiten Axialhemmungssteuerrings (22) befindet, so dass die Axialhemmung (17) des zweiten Planetengetriebegangwechselsystems veranlasst, dass das Sonnenrad (3) des zweiten Planetengetriebegangwechselsystems sich in einem freien Zustand ohne Fixierung befindet; die Axialhemmung (17) des dritten Planetengetriebegangwechselsystems sich im Radialbereich der Schaltwerkschließfläche (23b) des dritten Axialhemmungssteuerrings (23) befindet, so dass die Axialhemmung (17) des dritten Planetengetriebegangwechselsystems veranlasst, dass das Sonnenrad (3) des dritten Planetengetriebegangwechselsystems sich in einem freien Zustand ohne Fixierung befindet; das heißt, die Sonnenräder (3) sich alle in einem frei drehbaren Zustand ohne Fixierung befinden.

5. Vorrichtung zur Steuerung der Gangschaltung eines inneren Schaltwerks nach Anspruch 4, wobei die Führungshülse (2) zum Umschalten von der ersten Getriebestellung in eine zweite Getriebestellung funktionell ist; wobei in der genannten zweiten Getriebestellung die Axialhemmung (17) des ersten Planetengetriebegangwechselsystems sich im Radialbereich der Schaltwerköffnungsfläche (21c) des ersten Axialhemmungssteuerrings (21) befindet, so dass die Axialhemmung (17) des ersten Planetengetriebegangwechselsystems veranlasst, dass das Sonnenrad (3) des ersten Planetengetriebegangwechselsystems fixiert ist; die Axialhemmung (17) des zweiten Planetengetriebegangwechselsystems sich im Radialbereich der Schaltwerkschließfläche (22b) des zweiten Axialhemmungssteuerrings (22) befindet, so dass die Axialhemmung (17) des zweiten Planetengetriebegangwechselsystems veranlasst, dass das Sonnenrad (3) des zweiten Planetengetriebegangwechselsystems sich in einem frei drehbaren Zustand befindet; die Axialhemmung (17) des dritten Planetengetriebegangwechselsystems sich im Radialbereich der Schaltwerkschließfläche (23b) des dritten Axialhemmungssteuerrings (23) befindet, so dass die Axialhemmung (17) des dritten Planetengetriebegangwechselsystems veranlasst, dass das Sonnenrad (3) des dritten Planetengetriebegangwechselsystems sich in einem frei drehbaren Zustand befindet; in diesem Augenblick sich die Axialhemmung (17) des ersten Planetengetriebegangwechselsystems in einem Schaltwerköffnungszustand befindet, das heißt, das Sonnenrad (3) des ersten Planetengetriebegangwechselsystems fixiert ist, während die Axialhemmungen (17) des zweiten und des dritten Planetengetriebegangwechselsystems sich in einem Schaltwerkschließzustand befinden, das heißt, die Sonnenräder des zweiten und des dritten Planetengetriebegangwechselsystems in einem frei drehbaren Zustand sind.

6. Vorrichtung zur Steuerung der Gangschaltung eines inneren Schaltwerks nach Anspruch 5, wobei die Führungshülse (2) zum Umschalten von der zweiten Getriebestellung in eine dritte Getriebestellung funktionell ist; wobei in der genannten dritten Getriebestellung die Axialhemmung (17) des ersten Planetengetriebegangwechselsystems sich im Radialbereich der Schaltwerköffnungsfläche (21c) des ersten Axialhemmungssteuerrings (21) befindet, so dass die Axialhemmung (17) des ersten Planetengetriebegangwechselsystems veranlasst, dass das Sonnenrad (3) des ersten Planetengetriebegangwechselsystems fixiert ist; die Axialhemmung (17) des zweiten Planetengetriebegangwechselsystems sich im Radialbereich der Schaltwerköffnungsfläche (22c) des zweiten Axialhemmungssteuerrings (22) befindet, so dass die Axialhemmung (17) des zweiten Planetengetriebegangwechselsystems veranlasst, dass das Sonnenrad (3) des zweiten Planetengetriebegangwechselsystems fixiert ist; die Axialhemmung (17) des dritten Planetengetriebegangwechselsystems im Radialbereich der Schaltwerkschließfläche (23b) des dritten Axialhemmungssteuerrings (23) positioniert ist, so dass die Axialhemmung (17) des dritten Planetengetriebegangwechselsystems veranlasst, dass das Sonnenrad (3) des dritten Planetengetriebegangwechselsystems sich noch in einem frei drehbaren Zustand befindet; in diesem Zeitpunkt sich die Axialhemmungen (17) des ersten und des zweiten Planetengetriebegangwechselsystems sich in einem Schaltwerköffnungszustand befinden, das heißt, die Sonnenräder (3) davon sich in einem fixierten Zustand befinden, während die Axialhemmung (17) des dritten Planetengetriebegangwechselsystems sich in einem Schaltwerkschließzustand befindet und das Sonnenrad (3) davon sich in einem frei drehbaren Zustand befindet.

7. Vorrichtung zur Steuerung der Gangschaltung eines inneren Schaltwerks nach Anspruch 6, wobei die Führungshülse (2) zum Umschalten von der dritten Getriebestellung in eine vierte Getriebestellung funktionell ist; wobei in der genannten vierten Getriebestellung die Axialhemmung (17) des ersten Planetengetriebegangwechselsystems sich im Radialbereich der Schaltwerköffnungsfläche (21c) des ersten Axialhemmungssteuerrings (21) befindet, so dass die Axialhemmung (17) des ersten Planetengetriebegangwechselsystems veranlasst, dass das Sonnenrad (3) des ersten Planetengetriebegangwechselsystems sich in einem fixierten Zustand befindet; die Axialhemmung (17) des zweiten Planetengetriebegangwechselsystems im Radialbereich der Schaltwerköffnungsfläche (22c) des zweiten Axialhemmungssteuerrings positioniert ist, so dass die Axialhemmung (17) des zweiten Planetengetriebegangwechselsystems veranlasst, dass das Sonnenrad (3) des zweiten Planetengetriebegangwechselsystems sich in einem fixierten Zustand befindet; die Axialhemmung (17) des dritten Planetengetriebegangwechselsystems im Radialbereich der Schaltwerköffnungsfläche (23c) des dritten Axialhemmungssteuerrings positioniert ist, so dass die Axialhemmung (17) des dritten Planetengetriebegangwechselsystems veranlasst, dass das Sonnenrad (3) des dritten Planetengetriebegangwechselsystems sich in einem fixierten Zustand befindet; in diesem Augenblick sich die Axialhemmungen (17) der ersten bis dritten Planetengetriebegangwechselsysteme in einem Schaltwerköffnungszustand befinden, das heißt, die Sonnenräder (3) sich alle in einem fixierten Zustand befinden.

## Revendications

1. Dispositif de commande de changement de vitesse d'un dérailleur interne, ledit dérailleur interne comportant :
une pluralité de systèmes de changement de vitesse à roue planétaire ;
ledit dispositif de commande de changement de vitesse comportant :
une unité de commande de changement de vitesse ;
une pluralité de cliquets axiaux (17) ;
une pluralité de bagues de commande de cliquet axial (21, 22 et 23) servant à commander l'action de ladite pluralité de cliquets axiaux ;
dans lequel le nombre de bagues de la pluralité de bagues de commande de cliquet axial est identique au nombre de systèmes de la pluralité de systèmes de changement de vitesse à roue planétaire ;
dans lequel le nombre de cliquets de la pluralité de cliquets axiaux est identique au nombre de bagues de la pluralité de bagues de commande de cliquet axial ; et dans lequel les bagues de la pluralité de bagues de commande de cliquet axial sont connectées en série par la même unité de commande de changement de vitesse ;
**caractérisé en ce que** l'unité de commande de changement de vitesse comporte : un manchon de piste (2),
dans lequel une extrémité du manchon de piste (2) est dotée d'une partie d'acceptation de force (2a) qui est mobile sous l'effet de forces externes, et une autre extrémité de celui-ci est dotée d'une tige de liaison (2b) qui connecte en série la pluralité de bagues de commande de cliquet axial (21, 22 et 23) ; et
dans lequel chacune des bagues de commande de cliquet axial (21, 22 et 23) est formée avec des trous de connexion respectifs (2l a, 22a et 23a) servant à recevoir le manchon de piste (2) ; dans lequel chaque bague de commande de cliquet axial (21, 22 et 23) est dotée d'une came ou d'un dispositif semblable à une came ; et dans lequel les cames ou les dispositifs semblables à des cames ont des plages de déplacement de fonctionnement différentes.

2. Dispositif de commande de changement de vitesse d'un dérailleur interne selon la revendication 1, dans lequel une partie intérieure du dérailleur interne comprend la pluralité de systèmes de changement de vitesse à roue planétaire, dans lequel, entre une roue solaire (3) de chaque système de changement de vitesse à roue planétaire et un arbre de roue (1) du dérailleur interne, un cliquet respectif parmi la pluralité de cliquets axiaux (17) est configuré pour être installé ; et dans lequel tous les cliquets axiaux (17) sont commandés par le même manchon de piste (2).

3. Dispositif de commande de changement de vitesse d'un dérailleur interne selon la revendication 2, dans lequel chacune des cames ou chacun des dispositifs semblables à des cames comprend des surfaces de fermeture de dérailleur respectives (21b, 22b et 23b) et des surfaces d'ouverture de dérailleur respectives (21c, 22c et 23c) servant à faire dérailler le cliquet axial respectif (17) ;
les plages radiales mobiles des surfaces de fermeture de dérailleur respectives (21b, 22b et 23b) sont différentes les unes des autres, et les plages radiales mobiles des surfaces d'ouverture de dérailleur respectives (21c, 22c et 23c) sont différentes les unes des autres.

4. Dispositif de commande de changement de vitesse d'un dérailleur interne selon la revendication 3, dans lequel il y a trois desdits systèmes de changement de vitesse à roue planétaire dans le dérailleur interne ; dans lequel, dans une première position de vitesse, le manchon de piste (2) n'agit pas ; le cliquet axial (17) du premier système de changement de vitesse à roue planétaire se trouve dans la plage radiale de la surface de fermeture de dérailleur (21b) de la première bague de commande de cliquet axial (21), ce par quoi le cliquet axial (17) du premier système de changement de vitesse à roue planétaire amène la roue solaire (3) du premier système de changement de vitesse à roue planétaire à être dans un état libre sans être fixe ; le cliquet axial (17) du deuxième système de changement de vitesse à roue planétaire se trouve dans la plage radiale de la surface de fermeture de dérailleur (22b) de la deuxième bague de commande de cliquet axial (22), ce par quoi le cliquet axial (17) du deuxième système de changement de vitesse à roue planétaire amène la roue solaire (3) du deuxième système de changement de vitesse à roue planétaire à être dans un état libre sans être fixe ; le cliquet axial (17) du troisième système de changement de vitesse à roue planétaire se trouve dans la plage radiale de la surface de fermeture de dérailleur (23b) de la troisième bague de commande de cliquet axial (23), ce par quoi le cliquet axial (17) du troisième système de changement de vitesse à roue planétaire amène la roue solaire (3) du troisième système de changement de vitesse à roue planétaire à être dans un état libre sans être fixe ; c'est-à-dire que toutes les roues solaires (3) sont dans un état de libre rotation sans être fixes.

5. Dispositif de commande de changement de vitesse d'un dérailleur interne selon la revendication 4, dans lequel le manchon de piste (2) est en mesure d'être actionné pour être commuté de la première position de vitesse à une deuxième position de vitesse ; dans lequel, dans ladite deuxième position de vitesse, le cliquet axial (17) du premier système de changement de vitesse à roue planétaire se trouve dans la plage radiale de la surface d'ouverture de dérailleur (21c) de la première bague de commande de cliquet axial (21), ce par quoi le cliquet axial (17) du premier système de changement de vitesse à roue planétaire amène la roue solaire (3) du premier système de changement de vitesse à roue planétaire à être dans un état fixe ; le cliquet axial (17) du deuxième système de changement de vitesse à roue planétaire se trouve dans les limites de la plage radiale de la surface de fermeture de dérailleur (22b) de la deuxième bague de commande de cliquet axial (22), ce par quoi le cliquet axial (17) du deuxième système de changement de vitesse à roue planétaire amène la roue solaire (3) du deuxième système de changement de vitesse à roue planétaire à être dans un état de libre rotation ; le cliquet axial (17) du troisième système de changement de vitesse à roue planétaire se trouve dans les limites de la plage radiale de la surface de fermeture de dérailleur (23b) de la troisième bague de commande de cliquet axial (23), ce par quoi le cliquet axial (17) du troisième système de changement de vitesse à roue planétaire amène la roue solaire (3) du troisième système de changement de vitesse à roue planétaire à être dans un état de libre rotation ; à ce moment, le cliquet axial (17) du premier système de changement de vitesse à roue planétaire est dans un état d'ouverture de dérailleur, c'est-à-dire que la roue solaire (3) du premier système de changement de vitesse à roue planétaire est fixe, tandis que les cliquets axiaux (17) des deuxième et troisième systèmes de changement de vitesse à roue planétaire sont dans un état de fermeture de dérailleur, c'est-à-dire que les roues solaires des deuxième et troisième systèmes de changement de vitesse à roue planétaire sont dans un état de libre rotation.

6. Dispositif de commande de changement de vitesse d'un dérailleur interne selon la revendication 5, dans lequel le manchon de piste (2) est en mesure d'être actionné pour être commuté de la deuxième position de vitesse à une troisième position de vitesse ; dans lequel, dans ladite troisième position de vitesse, le cliquet axial (17) du premier système de changement de vitesse à roue planétaire se trouve dans les limites de la plage radiale de la surface d'ouverture de dérailleur (21c) de la première bague de commande de cliquet axial (21), ce par quoi le cliquet axial (17) du premier système de changement de vitesse à roue planétaire amène la roue solaire (3) du premier système de changement de vitesse à roue planétaire à être dans un état fixe ; le cliquet axial (17) du deuxième système de changement de vitesse à roue planétaire se trouve dans les limites de la plage radiale de la surface d'ouverture de dérailleur (22c) de la deuxième bague de commande de cliquet axial (22), ce par quoi le cliquet axial (17) du deuxième système de changement de vitesse à roue planétaire amène la roue solaire (3) du deuxième système de changement de vitesse à roue planétaire à être dans un état fixe ; le cliquet axial (17) du troisième système de changement de vitesse à roue planétaire est positionné dans les limites de la plage radiale de la surface de fermeture de dérailleur (23b) de la troisième bague de commande de cliquet axial (23), ce par quoi le cliquet axial (17) du troisième système de changement de vitesse à roue planétaire amène la roue solaire (3) du troisième système de changement de vitesse à roue planétaire à rester dans un état de libre rotation ; à ce moment, les cliquets axiaux (17) des premier et deuxième systèmes de changement de vitesse à roue planétaire sont dans un état d'ouverture de dérailleur, c'est-à-dire que leurs roues solaires (3) sont dans un état fixe, tandis que le cliquet axial (17) du troisième système de changement de vitesse à roue planétaire est dans un état de fermeture de dérailleur et que leur roue solaire (3) est dans un état de libre rotation.

7. Dispositif de commande de changement de vitesse d'un dérailleur interne selon la revendication 6, dans lequel le manchon de piste (2) est en mesure d'être actionné pour être commuté de la troisième position de vitesse à une quatrième position de vitesse ; dans lequel, dans ladite quatrième position de vitesse, le cliquet axial (17) du premier système de changement de vitesse à roue planétaire est positionné dans la plage radiale de la surface d'ouverture de dérailleur (21c) de la première bague de commande de cliquet axial (21), ce par quoi le cliquet axial (17) du premier système de changement de vitesse à roue planétaire amène la roue solaire (3) du premier système de changement de vitesse à roue planétaire à être dans un état fixe ; le cliquet axial (17) du deuxième système de changement de vitesse à roue planétaire est positionné dans la plage radiale de la surface d'ouverture de dérailleur (22c) de la deuxième bague de commande de cliquet axial, ce par quoi le cliquet axial (17) du deuxième système de changement de vitesse à roue planétaire amène la roue solaire (3) du deuxième système de changement de vitesse à roue planétaire à être dans un état fixe ; le cliquet axial (17) du troisième système de changement de vitesse à roue planétaire est positionné dans la plage radiale de la surface d'ouverture de dérailleur (23c) de la troisième bague de commande de cliquet axial, ce par quoi le cliquet axial (17) du troisième système de changement de vitesse à roue planétaire amène la roue solaire (3) du troisième système de changement de vitesse à roue planétaire à être dans un état fixe ; à ce moment, les cliquets axiaux (17) des premier à troisième systèmes de changement de vitesse à roue planétaire sont dans un état d'ouverture de dérailleur ; c'est-à-dire que toutes les roues solaires (3) sont dans un état fixe.
